# EUROPÄISCHE PATENTANMELDUNG

(11) **EP 2 151 701 A1**
(43) Veröffentlichungstag der Anmeldung: **10.02.2010**
(21) Anmeldenummer: 08161926.4
(22) Anmeldetag: 06.08.2008
(51) Int. Cl.: G01V 3/12

(54) **Radar-Messverfahren zum Orten eines in einem zu untersuchenden Medium eingebetteten Objekts**

(71) Anmelder: Leica Geosystems AG, 9435 Heerbrugg (CH)
(72) Erfinder: Leich, Martin, 9404 Rorschacherberg (CH); Aeschbacher, Michael, 8500 Frauenfeld (CH); Ruedisser, Andreas, 6900 Bregenz (AT); Giger, Kurt, 9464 Rüthi (CH)
(74) Vertreter: Harmann, Bernd-Günther

(57) **Zusammenfassung**

Die Erfindung betrifft ein Radar-Messverfahren zum Orten eines in einem zu untersuchenden Medium (11) eingebetteten Objekts (12) sowie zum Bestimmen mindestens eines mit der Signalausbreitungsgeschwindigkeit des Mediums (11) verknüpften Materialparameters, insbesondere der relativen Permittivität, mittels elektromagnetischer Radar-Signalimpulse SI im Bereich zwischen 0,5 und 10 GHz.

## Beschreibung

Die Erfindung betrifft ein Radar-Messverfahren zum Orten eines in einem zu untersuchenden Medium eingebetteten Objekts sowie zum Bestimmen der relativen Permittivität des Mediums nach dem Oberbegriff des Anspruchs 1.

Insbesondere im Baugewerbe spielt die Detektion und Ortung von in einem Medium eingeschlossenen Objekten - vor allem in Wänden eingebetteter länglicher Objekte - eine wesentliche Rolle, sei es zur Detektion von Armierungseisen, Metallrohren, elektrischen Leitungen oder Kunststoffrohren. Zum Beispiel ist die Kenntnis des Vorhandenseins, der Art und der relativen Lage von im Mauerwerk eingebetteten elektrischen Leitungen beim Bearbeiten desselben durch ein Handwerkzeuggerät wichtig um einerseits die Leitungen nicht zu beschädigen und andererseits zweckentsprechende Bearbeitungsvorgänge ausführen zu können. Beispielsweise kann dadurch das Erstellen von Dübellöchern mit einem Mindestabstand zu Leitungen oder Armierungseisen ermöglicht werden.

So werden eingebettete längliche Objekte beispielsweise nach der US 6,541,965 über die Änderung der Impedanz eines eingeprägten magnetischen Nahfeldes, nach der DE 10239431 über die Änderung der Impedanz eines eingeprägten elektrischen Nahfeldes oder nach der US 5,541,605 elektromagnetisch über Radar detektiert und charakterisiert. Da die beiden letztgenannten Messprinzipien physikalisch insbesondere auf die Änderung der Dielektrizitätskonstanten ansprechen, stellt die Detektion von Kunststoffrohrleitungen im Mauerwerk, welche im Frequenzbereich von etwa 1 - 10 GHz eine relative Dielektrizitätskonstante von ca. 4 bis 8 aufweist, eine messtechnische Herausforderung dar. Zusätzlich erschwert wird deren Detektion durch die zur Wärmeisolation in Ziegelsteinen eingebrachten Hohlräume im Mauerwerk, da deren Dimension und Lage denen von Kunststoffrohrleitungen ähnlich ist.

Gattungsgemässe Radarsignal-Messgeräte zum Orten einer Leitung in einer Wand besitzen beispielsweise Antennen zur Abstrahlung von hochfrequenten Radarsignalen im Frequenzbereich von z.B. 0.5 - 10 GHz.

Zur Aussendung und zum Empfang sehr breitbandiger elektromagnetischer Radarsignal-Impulse werden dabei meist Antennen verwendet, die einen geringen Schlankheitsgrad, d.h. eine flächenartige Ausdehnung, aufweisen. Antennen mit flächenhafter Ausdehnung lassen sich unter verhältnismässig geringem Aufwand herstellen und zu Arrays konfigurieren.

Zum Beispiel DE 102005062874 offenbart eine Breitbandantennenanordnung, welche aus mehreren dreieckig zugeschnittenen Leitersegmenten besteht, die eine stumpfwinklige Pyramide bilden. Jeweils zwei einander gegenüberliegende Leitersegmente bilden dabei einen flächenhaften Dipol, so dass die aus der pyramidenartigen Anordnung hervorgehende beide Dipole orthogonal zueinander polarisiert sind. Dies gewährleistet zwar trotz räumlicher Nähe bei Verwendung der Dipole als Sende- und Empfangsantenne eine relativ gute Entkopplung zwischen Sender und Empfänger bzw. ein relativ schwaches direkt übersprechendes Signal, stellt aber bei der Detektion länglicher Objekte mittels deren Rückstreuung eine suboptimale Lösung dar.

Die in US 7,333,045 dargestellte Lösung besteht aus drei jeweils zueinander um 120 Grad verdrehten Patchantennen, die in einer Ebene um einen zentralen Punkt angeordnet sind. Eine hinreichende Entkopplung der Antennen soll durch schlitzartige Einschnitte im Trägermaterial gewährleistet werden. Allerdings stehen die Antennen nicht orthogonal zueinander und weisen deshalb schon eine stärkere gegenseitige Kopplung auf.

Die beiden in der DE 102005062874 und der US 7,333,045 vorgeschlagenen Lösungen erfordern zudem breitbandige Zuleitungen für die abzustrahlenden bzw. zu empfangenen Signale. Diese aber stellen in ihrer im Allgemeinen asymmetrischen Struktur eine günstige Voraussetzung zur Ausbreitung von Mantelwellen dar, welche nur schwer zu unterdrücken sind und die Abstrahlungscharakteristik der Antenne beeinträchtigen.

Des Weiteren ist aus der DE 10104863 A1 eine Antenne zur Aussendung von hochfrequenten Radarsignalen bekannt. Die Antenne der DE 10104863 A1 ist eine einteilige, planare Antenne, die mit hoher mechanischer Stabilität auf einer Leiterplatte fixiert ist und ein relativ symmetrisches Richtdiagramm mit weitgehend reduzierten Nebenmaxima bzw. Nebenkeulen besitzt. Die Antenne besteht aus einer elektrisch leitenden Platte, welche an einander gegenüber liegenden Rändern zwei abgewinkelte Seitenabschnitte aufweist, die als Leitungsarme zur Ankopplung der Antenne an ein Speisennetzwerk dienen.

Die US 5,296,807 offenbart einen handhaltbaren Detektor für eingebettete längliche Objekte mit einem über eine Fläche verfahrbaren Messkopf für ein eingeprägtes magnetisches Nahfeld, einem Wegdetektor sowie mit einer örtlich separaten bildausgebenden Auswerteeinheit, die mit dem Messkopf signalübertragend verbunden ist.

Nach der US 5,051,748 weist ein transportabler untergrundergründender Radardetektor im Mikrowellenbereich zur Detektion von Armierungseisen in Beton ein Antennenarray mit entlang einer Richtung beabstandeten Wellenleitern auf, deren zugeordnete Lochantennen direkt ein zeilenweises Abbild erzeugen, welches in Verbindung mit einer Bewegung des Antennenarrays quer zur Richtung des Arrays und eines Computers ein flächiges Abbild des eingebetteten Objektes erzeugt, das über ein Bildausgabegerät dargestellt wird.

Nach der US 5,900,833 kann ein tragbarer Radardetektor mit synthetischem Aperturradar (SAR), dessen Signale jeweils in Signalprozessoren verarbeitet werden, ein dreidimensionales Abbild von im Untergrund eingebetteten Objekten wie armiertem Beton liefern, welches über ein Bildausgabegerät dargestellt wird. Die einzelnen, nicht notwendig in Reihe angeordneten, voneinander beabstandeten Antennen werden zur Erzeugung einer synthetischen Apertur mit dem Radardetektor quer zur Reihe der Antennen bewegt.

Nach der US 5,835,054 weist ein Radardetektor zur Ergründung von im Untergrund eingebetteten Objekten mehrere, in einem linearen Antennenarray angeordnete Antennen für elektromagnetische Wellen im Hochfrequenzbereich mit zumindest einer Sende/Empfangseinheit, einem Signalprozessor zur zeitlichen Korrelation und SAR-Auswertung der Signale sowie einer Anzeigeeinheit auf. Nachteilig bei dieser Lösung ist die Notwendigkeit eines Scannens mit nachfolgendem Berechnen der Positionsdaten über der Zeit.

Ebenso sind dem Fachmann die gattungsgemässen Methoden der rechnergestützten Signalverarbeitung insbesondere von zeitbasierten 3-d-Messdaten bekannt, die als solche selbst nicht Gegenstand der Erfindung sind. Zum Beispiel kann das so genannte Rückprojektions-Verfahren (back projection) angewendet werden, welches beispielhaft beschrieben ist in "Ultra-wideband Synthetic Aperture Imaging, Data and image processing", Greg Barrie, Defence R&D Canada - Ottawa Technical Memorandum, DRDC Ottawa TM 2003-015, Januar 2003.

Des Weiteren beschreibt die Europäische Patentanmeldung mit der Anmeldenummer 08104130.3 eine Radar-Messvorrichtung zur Ortung eines in einem zu untersuchenden Medium eingeschlossenen Objekts mittels elektromagnetischer hochfrequenter Signalimpulse. Dafür sind eine Antennenanordnung in einer ersten Ebene aus mehreren planaren Antennen sowie Sende- und Empfangsschaltungen zur Aussendung bzw. zur Detektion der Signalimpulse vorgesehen.

Zur Abstrahlungsoptimierung weist die Antennenanordnung mindestens eine erste und eine zweite Antennenuntergruppe auf, wobei innerhalb der ersten und der zweiten Antennenuntergruppen die Antennen jeweils linear nebeneinander derart angeordnet, sodass sich jeweils nächstliegende Antennen der ersten und der zweiten Antennenuntergruppe in Richtung ihres Fernfeldminimums gegenüberliegen.

Durch diese Anordnung der Antennen jeweils gegenüberliegend in deren Abstrahlungsminimum kann eine hinreichende Entkopplung zwischen den einzelnen Antennen der beiden Untergruppen erreicht werden. Insbesondere weisen die erste zum Senden vorgesehene und die zweite zum Empfang vorgesehene Untergruppe dieselbe Anzahl an linear nebeneinander angeordneten Antennen auf, die sich jeweils paarweise gegenüberliegen. Zusätzlich wird vorgeschlagen, auf der dem zu untersuchenden Medium abgewandten Seite der planaren Antennenanordnung eine Schicht hochfrequenzabsorbierendes Material anzuordnen, um ein durch das elektrische Nahfeld bedingtes Übersprechen zusätzlich zu reduzieren.

Um ein Objekt in einer Wand zu lokalisieren, werden nun die breitbandigen Signalimpulse über die an verschiedenen Orten auf dem Medium platzierten Sende-Antennen der ersten Untergruppe in das Medium abgestrahlt. Die abgestrahlten Impulse werden an den eingebetteten Objekten reflektiert und von den ebenfalls auf dem Medium platzierten EmpfangsAntennen der zweiten Untergruppe empfangen. Durch eine Auswerteeinheit wird der Ort des eingebetteten Objektes im Medium in Relation zur Position der Antennen aus dem zeitlichen Verlauf der empfangenen Signale rekonstruiert.

Um dabei den Ort des eingebetteten Objekts korrekt aus dem zeitlichen Verlauf der empfangenen Signale berechnen zu können, muss allerdings die Ausbreitungsgeschwindigkeit der Impulse im Medium bekannt sein. Bei bisher bekannten Radar-Messvorrichtungen werden die für die Ausbreitungsgeschwindigkeit relevanten Parameter des einbettenden Mediums - insbesondere die relative Permittivität des Mediums - entweder durch mittlere Standardwerte angenommen oder anhand von separat durchgeführten Zusatzmethoden bestimmt.

Beispielsweise wird in der DE 19915017 eine Methode beschrieben, um die relative Permittivität des einbettenden Mediums durch eine Analyse des direkt übersprechenden Signals zwischen den auf das zu untersuchende Medium aufgesetzten Sende- und Empfangsantennen zu bestimmen. Dazu wird ein spektrales Maximum des direkt übersprechenden Signals bestimmt, welches sich auf die Eigenschaften der Antennen bei Auflage auf ein bestimmtes Medium zurückführen lässt. Nachteiligerweise ist dabei allerdings ein verhältnismässig hoher Aufwand erforderlich, um das direkt übersprechende Signal von rückgestreuten Signalen zu trennen, welche an oberflächennah eingebetteten Objekten reflektiert werden.

Ein weiterer Ansatz zur Ermittlung der signalausbreitungsgeschwindigkeitsrelevanten Parameter eines Mediums ist aus der DE 102005037632 bekannt. Das dort geoffenbarte Verfahren stützt sich auf eine separate Vorrichtung in Form zweier auf der Oberfläche des einbettenden Mediums auseinanderliegender flächiger Elektroden, welche differentiell mit einem im Vergleich zum Messfrequenzbereich niederfrequenten Signal gespeist werden. Das Signal erzeugt im einbettenden Medium ein quasistatisches elektrisches Feld, welches sich tief in das Medium ausdehnt und von kleineren Inhomogenitäten weitgehend unbeeinflusst bleibt. Eine Impedanzmessung unter der Verwendung des niederfrequenten Signals erlaubt die Bestimmung der Eigenschaften des sich aus den zwei flächigen Elektroden bildenden Kondensators und damit der Eigenschaften des als Dielektrikum zu betrachtenden einbettenden Mediums. Ein wesentlicher Nachteil besteht allerdings darin, dass das niederfrequente Signal nicht direkt die im Messfrequenzbereich zu erwartenden Materialeigenschaften widerspiegelt. Dieser Nachteil kann zwar durch Verwendung mathematischer Modelle für die bekannten Materialen rechnerisch vermindert werden, die den Verlauf von Real- und Imaginärteil der relativen Permittivität der Materialien über einen weiten Frequenzbereich beschreiben. Allerdings ist dafür zum einen ein hoher Aufwand erforderlich und zum anderen ein eingespeichertes Modell für das untersuchte Material notwendig. Da die im Baubereich verwendeten Materialien stetig vielfältiger werden, müsste jede neue Materialart bzw. Stoffklasse durch ein Update in der Software berücksichtigt werden.

Nach der US 6,600,441 bzw. der DE 10050655 C1 sind bei einem Radardetektor für eingebettete längliche Objekte mehrere, definiert voneinander beabstandete Antennenpaare für elektromagnetische Wellen im Hochfrequenzbereich vorhanden, aus deren einzelnen Radarmesssignalen der zeitgesteuerte Signalprozessor über Korrelationsfunktionen längliche Objekte selektiert und deren Lage in der Ebene ermittelt. Dazu wird eine Auswerteeinheit für SAR verwendet. Zusätzlich weist der Radardetektor eine Anzeigeeinheit auf.

Des Weiteren ist in der DE 10050655 C1 geoffenbart, dass vorteilhaft in einer Reihe zumindest drei zueinander parallel polarisierte Antennen angeordnet sind, wodurch zwei Sende-Empfangs-Antennenpaare mit einem unterschiedlichen Abstand zueinander schaltbar sind. Dadurch kann die Tiefe eingebetteter Objekte unabhängig von der Ausbreitungsgeschwindigkeit der Radarwellen im Untergrund bestimmt werden. Eine Bestimmung oder Ermittlung der ausbreitungsrelevanten Parameter des einbettenden Materials ist nicht vorgesehen.

Eine Aufgabe der Erfindung ist das Bereitstellen eines verbesserten Radar-Messverfahrens zum Orten eines in einem zu untersuchenden Medium eingeschlossenen Objekts und zum Bestimmen der signalausbreitungsgeschwindigkeitsrelevanten Parameter des Mediums, insbesondere der relativen Permittivität des Mediums.

Im Speziellen soll dabei ein wenig aufwändiges Verfahren bereitgestellt werden, das keine separate Vorrichtung zur Bestimmung der ausbreitungsgeschwindigkeitsrelevanten Parameter erfordert. Dabei sollen die relevanten Materialeigenschaften des Mediums direkt für jenen Hochfrequenzbereich bestimmt werden, in welchem auch die Radarmess-Signale zur Ortung der eingebetteten Objekte ausgesendet werden.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Entsprechend dem erfindungsgemässen Radar-Messverfahren zum Orten eines in einem zu untersuchenden Medium eingebetteten Objekts sowie zum Bestimmen zumindest eines der signalausbreitungsrelevanten Materialparameter des Mediums erfolgt das Bestimmen der Materialparameter nicht wie nach dem Stand der Technik anhand eines separaten Verfahrens oder mittels einer speziell dafür angeordneten Zusatzvorrichtung, sondern aus den für das Orten des Objekts erfassten Radar-Messdaten selbst.

Dazu werden breitbandige elektromagnetische Radar-Signalimpulse im Bereich zwischen 0,5 und 10 GHz in das zu untersuchende Medium ausgesendet und am eingebetteten Objekt reflektierte Anteile der Radar-Signalimpulse empfangen.

Das Aussenden und Empfangen erfolgt dabei mit mindestens zwei - insbesondere mindestens drei - Sende-Empfangs-Kombinationen mit sich jeweils unterscheidenden Aussende- und/oder Empfangspositionen, wobei diese relativ zueinander bekannt sind.

Das bedeutet, dass die breitbandigen Signalimpulse z.B. mittels an verschiedenen Orten auf dem Medium platzierten Antennen in dieses Medium abgestrahlt werden. Die abgestrahlten Impulse werden an den eingebetteten Objekten reflektiert und mittels ebenfalls auf dem Medium platzierten Antennen empfangen. Insbesondere können dabei sowohl die Sende- als auch die Empfangsantennen in linearer, zueinander paralleler Anordnung auf der Oberfläche des Mediums angeordnet sein. Dadurch können mehrere Sende-Empfangs-Paarungen bzw. Sende-Empfangs-Kombinationen mit unterschiedlichen Aussende- und/oder Empfangspositionen zueinander geschaltet werden, sodass der Ort des eingebetteten Objektes im Medium in Relation zur Position der Antennen aus dem zeitlichen Verlauf der empfangenen Signale rekonstruiert werden kann.

Dafür werden die jeweiligen Laufzeiten der empfangenen Radar-Signalimpulse bestimmt und Bewertungsprofile aus den empfangenen Radar-Signalimpulsen für die jeweiligen Sende-Empfangs-Paarungen erstellt.

Unter Verwendung der Kenntnis der jeweiligen Aussende- und Empfangspositionen werden erfindungsgemäss die erstellten Bewertungsprofile abgeglichen, wobei unter dem Begriff Abgleichen ein zueinander in Bezug Bringen - wie z.B. ein Zusammenstellen, Überlagern, Aufsummieren bzw. Akkumulieren oder Korrelieren - verstanden wird. Aus dem Abgleich der Bewertungsprofile werden dann eine Lage für das eingebettete Objekt sowie der gesuchte Materialparameter des Mediums bestimmt.

Beispielsweise kann durch Kombinieren und Korrelieren der für die einzelnen Sende-Empfangs-Kombinationen erstellten Bewertungsprofile - z.B. durch Überlagerung derselben - der Ort des eingebetteten Objekts unabhängig von der Signalimpulsausbreitungsgeschwindigkeit mit einer Überbestimmtheit abgeleitet werden. Das rechnerische Bestimmen des gesuchten Materialparameters des Mediums, insbesondere der relativen Permittivität, kann nun aus den anhand der empfangenen Rückstreusignale bestimmten jeweiligen Laufzeiten sowie aus den durch den ermittelten Ort des eingebetteten Objekts und durch die bekannten Aussende- und Empfangspositionen festgelegten jeweiligen Laufstrecken der Radar-Signalimpulse erfolgen.

Alternativ können die einzelnen Bewertungsprofile für die jeweiligen Sende-Empfangs-Paarungen für mehrere verschieden angenommene, durchsimulierte Werte der relativen Permittivität des Mediums bestimmt werden. Das bedeutet, dass mehrere Auswertungen jeweils unter Variation eines angenommenen Werts für die Permittivität erfolgen. Zum Beispiel werden jeweils Bewertungsprofile für verschiedene, simulierte Werte der relativen Permittivität des Mediums zwischen εᵣ = 3 und εᵣ = 8 erstellt und für die jeweiligen simulierten Permittivitätswerte abgeglichen und/oder aufsummiert. Anschliessend kann die relative Permittivität zu jenem Wert bestimmt werden, für welchen die abgeglichenen und/oder akkumulierten Bewertungsprofile derart aufeinanderpassen, dass sich derselbe Ort für das eingebettete Objekt aus den Bewertungsprofilen für die jeweiligen Sende-Empfangs-Paarungen ergibt.

Da die Richtung der empfangenen Reflexion eines ausgesendeten Impulses mit einer einzigen Empfangsantenne - d.h. mit einer einzigen Sende-Empfangs-Paarung - im allgemeinen nicht bestimmt werden kann, können als Bewertungsprofile z.B. in einer Bildebene für jeweils eine Sende-Empfangs-Paarung alle Punkte mit der entsprechenden momentanen Empfangssignalstärke bewertet werden, in denen das die Reflexion erzeugende Objekt positioniert sein könnte. Alle diese Punkte liegen auf einer Ellipse, deren beide Brennpunkte mit den Aussende- bzw. Empfangspositionen identisch sind. Die Signale aus mehreren Sende-Empfangs-Kombinationen bzw. Sende-Empfangs-Paarungen erzeugen in der Bildebene somit mehrere elliptisch geformte Bewertungsprofile. Da sich bei korrekter Erstellung dieser Profile - d.h. bei korrekt angenommener Ausbreitungsgeschwindigkeit der Signale im Medium - alle elliptischen Verläufe in demjenigen Punkt schneiden, der dem tatsächlichen Ort des verursachenden Objektes entspricht, kann der Ort des Objektes im Maximum der Summe aller Bewertungsprofile gefunden werden. Zur Bestimmung der Ausbreitungsgeschwindigkeit und somit des eigentlichen Orts des verborgenen Objekts können beispielsweise nun die Bewertungsprofile für verschieden angenommene, durchsimulierte Werte der Permittivität des Mediums erstellt und anschliessend die Permittivität zu jenem Wert bestimmt werden, für welchen ein Maximalwert der Summe aller Bewertungsprofile festgestellt wird. Ein Maximalwert der Summe aller Bewertungsprofile ergibt sich nämlich dann, wenn alle elliptischen Verläufe für die einzelnen Sende-Empfangs-Kombinationen sich in demjenigen Punkt schneiden, der dem tatsächlichen Ort des die Reflexe verursachenden eingebetteten Objekts entspricht. Somit können mit diesem Schritt sowohl die Permittivität des Mediums abgeleitet und im selben Zuge der eigentliche Ort des Objekts bestimmt werden.

Eine weitere Möglichkeit besteht in der vergleichenden Auswertung zweier oder mehrerer Gruppen von Sende-Empfangs-Kombinationen. Werden - rein beispielhaft - für sechs unterschiedliche Sende-Empfangs-Kombinationen aus den jeweiligen zeitlichen Empfangssignalverläufen Bewertungsprofile erstellt, können die sechs Sende-Empfangs-Kombinationen in zwei Gruppen mit jeweils drei Sende-Empfangs-Kombinationen eingeteilt werden. Für jede Gruppe kann anschliessend aus den einzelnen Bewertungsprofilen ein Aufsummieren oder Korrelieren für verschieden angenommene Werte der Permittivität erfolgen. Die jeweiligen Teilsummen der Bewertungen zeigen bei richtiger Annahme der Permittivität identische Positionen für die Lage des Objekts. Somit kann die Permittivität zu diesem Wert bestimmt werden und ebenso die dafür ermittelte Lage als die korrekte Lage des Objekts ausgegeben werden.

Unter den unterschiedlichen Sende-Empfangs-Kombinationen ist dabei zu verstehen, dass entweder von verschiedenen Positionen aus ausgesendet oder von verschiedenen Positionen aus empfangen wird, sodass sich mehrere Sende-Empfangs-Paare ergeben. Ebenso ist es auch möglich, die Empfangs- und die Sendeposition zu variieren. Diese mehrere unterschiedliche Sende-Empfangs-Kombinationen können z.B. erreicht werden durch mehrere auf dem Medium angeordnete Sendeantennen und/oder mehrere auf dem Medium angeordnete Empfangsantennen, wobei jeweils unterschiedliche Sende-Empfangs-Paarungen untereinander geschaltet werden können. Dadurch ist es möglich bei den Sende-Empfangs-Paarungen entweder unterschiedliche Sendepositionen, unterschiedliche Empfangspositionen oder unterschiedliche Sende- und Empfangspositionen zu erreichen.

Insbesondere kann dafür eine Radar-Messvorrichtung zum Einsatz kommen, die eine Antennenanordnung aus zwei linearen Untergruppen von jeweils mehreren - rein beispielhaft fünf - Sende- bzw. Empfangsantennen aufweist. Die Antennenanordnung kann dabei derart auf einer oder mehreren Leiterplatten angeordnet sind, sodass sich diese zum möglichst direkten bzw. dichten Anlegen an eine Aussenfläche des zu untersuchenden Materials eignet.

Anhand der z.B. fünf Sende- und fünf Empfangsantennen können nun 25 verschiedenen Sende-Empfangs-Kombinationen mit entweder unterschiedlichen Sendepositionen, unterschiedlichen Empfangspositionen oder unterschiedlichen Sende- und Empfangspositionen erzeugt werden. Beispielsweise werden die breitbandigen hochfrequenten Messsignale abwechselnd und sequenziell nacheinander durch jeweils eine der Antennen der Sendeantennen-Untergruppe ausgesendet, insbesondere sodass die Antennen nacheinander mit vorgegebener Aussendungs-Rate jeweils Messsignalimpulse in das zu untersuchende Medium aussenden. An im Medium eingeschlossenen Objekten reflektierte Teile der Messsignalimpulse werden jeweils durch die fünf Antennen der Empfangsantennen-Untergruppe empfangen und ausgewertet. Dabei werden die jeweiligen Laufzeiten der Signalimpulse - von der jeweils aussendenden Antenne zu den jeweiligen empfangenden Antennen - bestimmt und aus der entsprechenden Empfangssignalstärke die Bewertungsprofile für die Sende-Empfangs-Paarungen erstellt und nach einer der vorgängig beschriebenen Methoden zur Bestimmung der Permittivität des Mediums und daraus des Ortes des eingebetteten Objekts ausgewertet.

Vorrichtungsseitig können dafür Steuermittel vorhanden sein, sodass mit den zur Aussendung ausgebildeten Antennen abwechselnd jeweils nacheinander mit definiertem zeitlichem Versatz Signalimpulse aussendbar sind.

Alternativ können die mehreren verschiedenen Sende-Empfangs-Kombinationen bzw. Sende-Empfangs-Paarungen auch durch eine einzige Sende- und eine einzige Empfangsantenne erreicht werden, die jeweils um einen bestimmten Versatz auf der Oberfläche des zu untersuchenden Mediums verschoben werden, sodass mehrere unterschiedliche und relativ zueinander bekannte Aussende- und Empfangspositionen erzeugt werden.

Des Weiteren können gemäss einer Weiterbildung des erfindungsgemässen Verfahrens mehrfach rückgestreute Signale beispielsweise durch die Empfangssignalstärke erkannt und aussortiert bzw. gefiltert werden, sodass eine durch Mehrfachreflexionen bedingte Verfälschung des Ergebnisses des ermittelten Objekt-Ortes und der ermittelten Permittivität des Mediums vermindert oder gar verhindert werden kann.

Zur Generierung eines Messergebnisses bzw. Abbildes des zu untersuchenden Mediums durch die Auswerteeinheit aus den empfangenen zurückgestreuten Signalimpulsen können dabei sämtliche dem Fachmann bekannte Methoden der rechnergestützten Signalverarbeitung angewendet werden.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: eine Ausführungsform für die Antennenanordnung der erfindungsgemässen Radar-Messvorrichtung;
- Fig.2: eine Ausführungsform der erfindungsgemässen Radar-Messvorrichtung;
- Fig.3a-d: ein erstes Beispiel von erstellten Kombinationsauswertungen aus den einzelnen Bewertungsprofilen für unterschiedlich angenommene Werte der Permittivität des Mediums; und
- Fig.4a-d: ein zweites Beispiel von erstellten Kombinationsauswertungen aus den einzelnen Bewertungsprofilen für unterschiedlich angenommene Werte der Permittivität des Mediums.

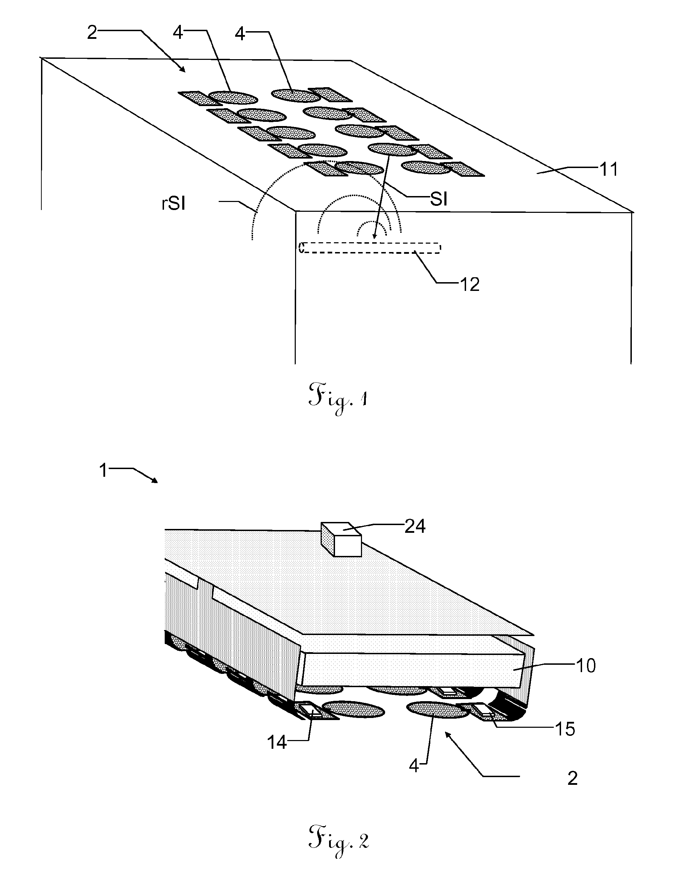

Figuren 1 und 2 zeigen eine erfindungsgemässe Radar-Messvorrichtung 1 zur Ortung eines in einem zu untersuchenden Medium 11 eingeschlossenen Objekts 12 sowie zur Bestimmung mindestens eines mit der Signalausbreitungsgeschwindigkeit des Mediums 11 verknüpften Materialparameters, insbesondere der relativen Permittivität des Mediums 11, mittels elektromagnetischer Signalimpulse SI im Bereich zwischen 0,5 und 10 GHz.

Die Radar-Messvorrichtung 1 weist dazu eine Antennenanordnung 2 aus mehreren Antennen 4, die zum Empfang und/oder zur Aussendung der Signalimpulse SI ausgebildet und relativ zueinander bekannt positioniert sind auf. Die Antennen 4 sind dabei mit Sendeschaltungen 14 zur Erzeugung der auszusendenden Signalimpulse bzw. Empfangsschaltungen 15 zur Detektion von am Objekt 12 reflektierten Teilen der Signalimpulse rSI verbunden. Zusätzlich sind Steuermittel vorhanden, mittels welcher die Sende- und Empfangsschaltungen 14,15 derart schaltbar und steuerbar sind, dass die Signalimpulse SI,rSI mit mindestens zwei - insbesondere mindestens drei - Sende-Empfangs-Antennenkombinationen bzw. Sende-Empfangs-Antennenpaarungen ausgesendet bzw. empfangen werden.

Des Weiteren ist eine Auswerteeinheit 24 mit einem Rechenmittel vorhanden, wobei die Auswerteeinheit 24 ausgebildet ist zur Bestimmung des Orts, insbesondere der Einbettungstiefe und/oder der exakten dreidimensionalen Position des Objekts 12, sowie der ausbreitungsgeschwindigkeitsrelevanten Parameter des Mediums 11 anhand des erfindungsgemässen Verfahrens. Dafür bestimmt die Auswerteeinheit 24 die jeweiligen Laufzeiten der empfangenen Signalimpulse und erstellt Bewertungsprofile für die jeweiligen Sende-Empfangs-Antennenkombinationen aus den empfangenen Signalimpulsen. Beispielsweise können als Bewertungsprofile die mittels einer Sende-Empfangs-Paarung empfangenen Signalimpulse jeweils mit ihrer Laufzeit und Empfangssignalstärke verknüpft abgespeichert werden.

Die Richtung der empfangenen Reflexion rSI eines ausgesendeten Impulses kann im Allgemeinen mit einer einzigen Sende-Empfangs-Paarung nicht bestimmt werden. Auch die Laufstrecken der ausgesendeten, reflektierten und empfangenen Signalimpulse können bei im entsprechenden Frequenzbereich unbekannter Ausbreitungsgeschwindigkeit im Medium 11 nicht ermittelt werden. Daher werden erfindungsgemäss für mehrere Sende-Empfangs-Paarungen aus den empfangenen Signalen Bewertungsprofile erstellt und diese - unter Verwendung der Kenntnis der relativ zueinander bekannten Positionierung der einzelnen Antennen 4 - abgeglichen und/oder akkumuliert. Durch das miteinander Verknüpfen der einzelnen Bewertungsprofile kann die Ausbreitungsgeschwindigkeit der Impulse im Medium 11 (insbesondere die relative Permittivität als signalausbreitungsrelevanter Materialparameter) bestimmt werden. Anhand der im entsprechenden Frequenzbereich bestimmten Ausbreitungsgeschwindigkeit der Signalimpulse können nun auch die Laufstrecken der Signalimpulse für die einzelnen Sende-Empfangs-Paarungen ermittelt und daraus wiederum der Ort des eingebetteten Objekts 12 berechnet werden.

Insbesondere wird als der Ort des Objekts 12 seine Einbettungstiefe im Medium 11 (z.B. in einer Wand) und im Speziellen die exakte dreidimensionale Position relativ zu den Aussende- und Empfangspositionen (d.h. relativ zu den Positionen der Antennen) ermittelt.

Zur Anzeige des Wertes der ermittelten Permittivität sowie des berechneten Ortes für das eingebettete Objekt 11 verfügt die Radar-Messvorrichtung 1 in einer speziellen Ausführungsform über ein Display.

Die Darstellung aus Figur 2 zeigt die Antennenanordnung 1 mit einer parallel dazu angeordneten hochfrequenzabsorbierenden Materialschicht 10. Das durch eine Zone freien Raums von den Antennen-Arrays getrennte absorbierende Material 10 ist - ausser wegen dessen entkoppelnder Wirkung - vorteilhaft, um sowohl Eigenresonanzen der einzelnen Antennen zu bedämpfen als auch irreführende Reflexionen leitfähiger Strukturen und Komponenten der die Antennenanordnung 2 beinhaltenden Radar-Messvorrichtung 1 zu unterdrücken.

In Figur 1 ist zum einfacheren Verständnis die Antennenanordnung 2 ohne die weiteren vorhandenen Komponenten der Radar-Messvorrichtung in einem an das zu untersuchende Medium 11 angelegten Zustand dargestellt. Im Medium 11 ist dabei ein Objekt eingebettet, an dem die ausgesendeten Signalimpulse SI reflektiert werden.

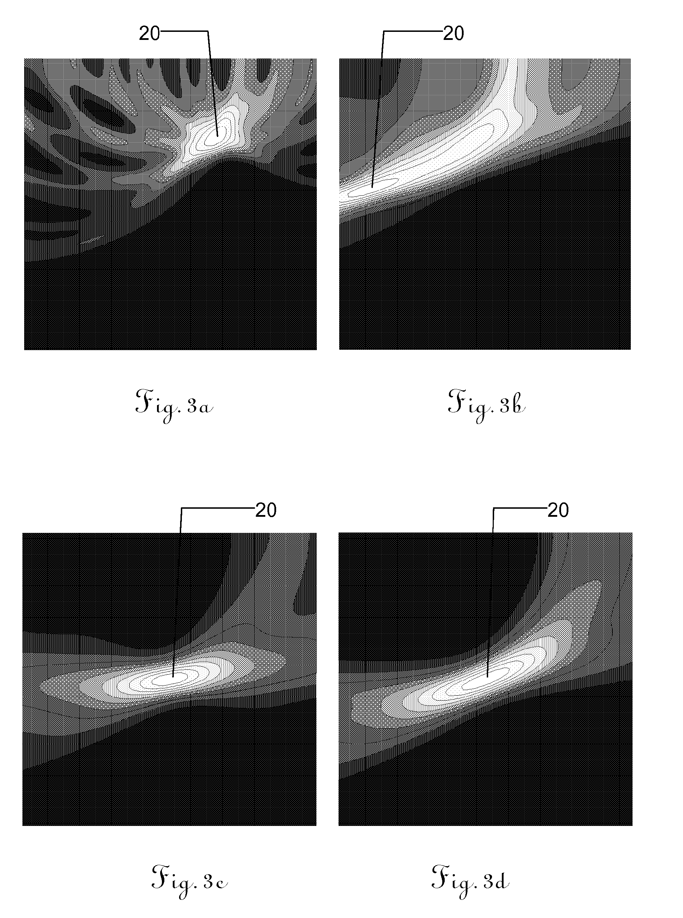

Figuren 3a-d zeigen eine erste erfindungsgemässe Möglichkeit, um aus den - zur Ortung eines eingebetteten Objekts - ausgesendeten Signalen die relative Permittivität des zu untersuchenden Mediums zu bestimmen. Die Signalimpulse werden mit mehreren Sende-Empfangs-Kombinationen ausgesendet bzw. empfangen. Zur Bestimmung der relativen Permittivität werden die empfangenen Signale unter Variation des Wertes für die Permittivität für zwei oder mehrere Gruppen von Sende-Empfangs-Kombinationen vergleichend ausgewertet.

Zum Beispiel werden für sechs unterschiedliche Sende-Empfangs-Kombinationen Bewertungsprofile aus den jeweiligen zeitlichen Empfangssignalverläufen erstellt und die sechs Sende-Empfangs-Kombinationen in zwei Gruppen mit jeweils drei Sende-Empfangs-Kombinationen eingeteilt. Für jede Gruppe kann anschliessend aus den einzelnen Bewertungsprofilen ein Aufsummieren oder Korrelieren für verschieden angenommene Werte der Permittivität erfolgen.

Figuren 3a-3b sind beispielhafte Darstellungen von verknüpften Bewertungsprofilen für einen ersten angenommenen Wert der Permittivität.

Figur 3a zeigt dabei z.B. eine für die erste Gruppe von Sende-Empfangs-Kombinationen erstellte Verknüpfung der einzelnen Bewertungsprofile, wobei sich an einer ersten Position ein Maximum 20 innerhalb der dargestellten Auswertung ergibt. In Figur 3b ist eine für die zweite Gruppe von Sende-Empfangs-Kombinationen erstellte Verknüpfung der einzelnen Bewertungsprofile dargestellt. Das Maximum 20 der für die zweite Gruppe erstellten Auswertung befindet sich jedoch an einer anderen Stelle als das Maximum 20 der Auswertung für die erste Gruppe. Folglich stimmt der angenommene Wert für die Permittivität nicht mit dem tatsächlichen Wert der Permittivität des Mediums überein.

Für die in den Figuren 3c-3d gezeigten Auswertungen wurde ein zweiter Wert der Permittivität angenommen.

Figur 3c zeigt dabei wiederum die Auswertung der empfangenen Signale für die erste Gruppe von Sende-Empfangs-Kombinationen, wobei sich wiederum an einer ersten Position ein Maximum 20 innerhalb der dargestellten Auswertung ergibt. In Figur 3d ist die für die zweite Gruppe von Sende-Empfangs-Kombinationen erstellte Verknüpfung der einzelnen Bewertungsprofile gezeigt. Für den nun angenommenen Wert der Permittivität stimmt das Maximum 20 der für die zweite Gruppe erstellten Auswertung mit dem Maximum 20, das sich aus der Auswertung der ersten Gruppe von Sende-Empfangs-Konfigurationen ergibt, überein. Folglich wird nun der zweite angenommene Wert der Permittivität als der tatsächliche Wert bestimmt.

Eine solche Auswertung kann z.B. für viele angenommene Werte der Permittivität erfolgen und jener Wert als der tatsächliche bestimmt werden, für den die Maxima der für die beiden Gruppen erfolgenden Auswertungen am besten übereinstimmen, da die jeweiligen Teilauswertungen der Bewertungen bei richtiger Annahme der Permittivität identische Positionen für die Lage des Objekts zeigen.

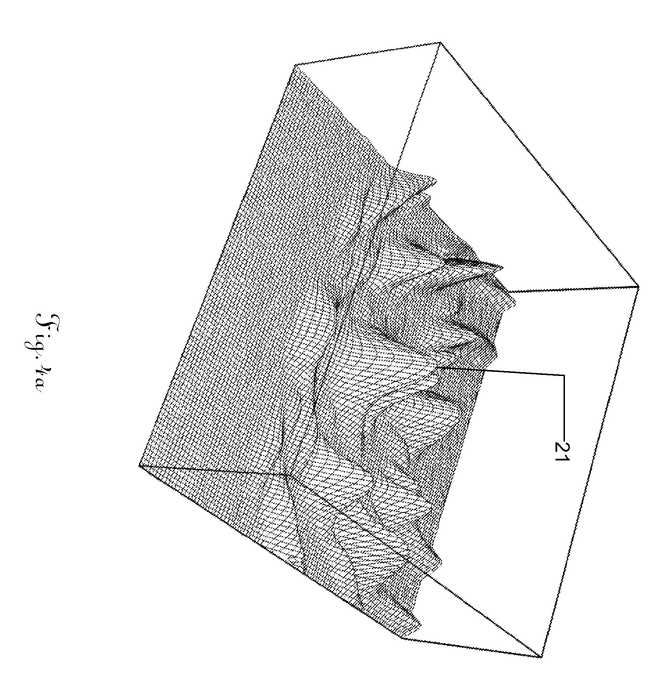

Figuren 4a-d zeigen eine alternative Möglichkeit, um durch Annehmen von verschiedenen Werten der relativen Permittivität - d.h. durch Variation des angenommenen Permittivitätswerts - die eigentliche tatsächliche relative Permittivität des Mediums zu bestimmen.

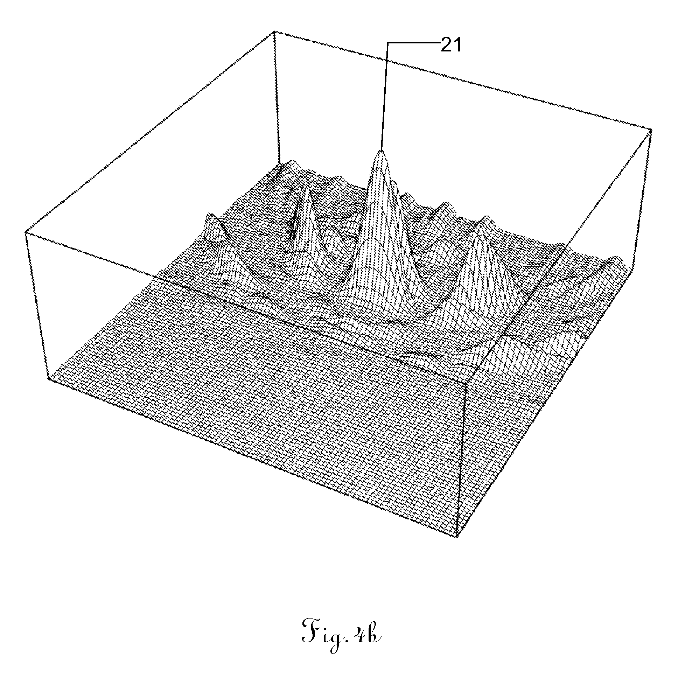

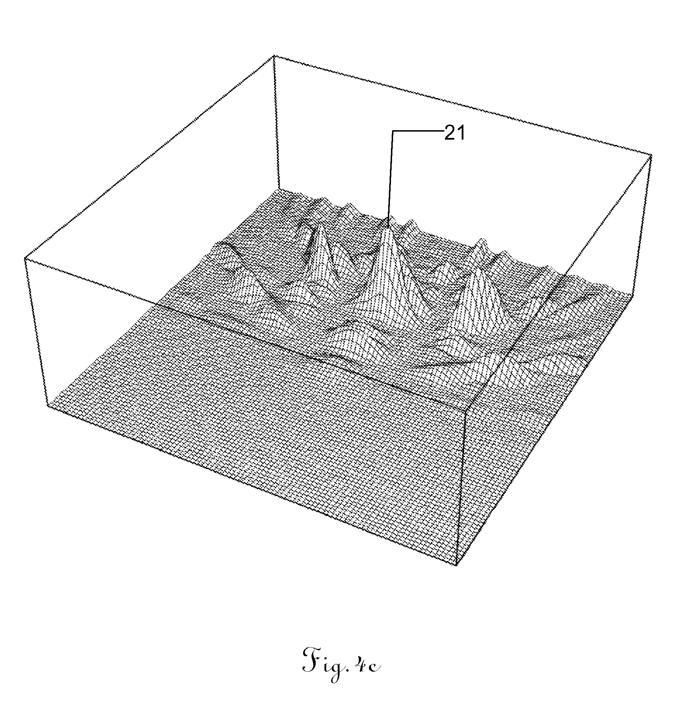

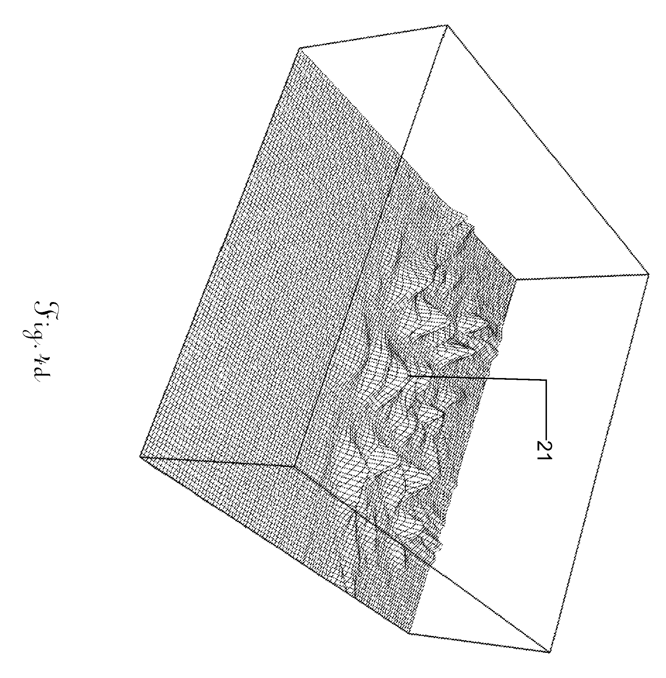

Zum Beispiel werden jeweils Bewertungsprofile für verschiedene, simulierte Werte der relativen Permittivität des Mediums zwischen εᵣ, = 3 und εᵣ = 8 erstellt und für die jeweiligen simulierten Permittivitätswerte aufsummiert. Eine solche Aufsummierung der Bewertungsprofile der jeweiligen Sende-Empfangs-Paarungen ist in den Figuren 4a-4d gezeigt, wobei in jeder Figur ein anderer Wert für die Permittivität angenommen wurde. Die relative Permittivität kann aus diesen Auswertungen zu jenem Wert bestimmt werden, für welchen sich der höchste Maximalwert 21 der Summe der Bewertungsprofile ergibt. In Figur 4b ist der Maximalwert 21 im Vergleich zu den in Figuren 4a, 4c und 4d dargestellten Auswertungen am höchsten, sodass die Permittivität zu jenem Wert bestimmt wird, der zur Erstellung der in Figur 4c gezeigten Auswertung angenommen wurde.

Dieses Simulationsverfahren unter Annahme von verschiedenen Werten für die Permittivität erfolgt erfindungsgemäss insbesondere rechnergestützt, sodass viele verschiedene Werte durchsimuliert werden können und die Permittivität vollautomatisch zu jenem Wert bestimmt wird, für den sich der höchste Maximalwert 20 in den Aufsummierungen bzw. Akkumulationsauswertungen, die für die jeweiligen einzelnen Bewertungsprofile erstellt werden, ergibt.

Es versteht sich, dass diese dargestellten Figuren nur mögliche Ausführungsbeispiele schematisch darstellen. Die verschiedenen Ansätze können erfindungsgemäss miteinander sowie mit Verfahren bzw. Radarmess-Vorrichtungen des Stands der Technik kombiniert werden.

## Patentansprüche

1. Radar-Messverfahren zum Orten eines in einem zu untersuchenden Medium (11) eingebetteten Objekts (12) und, im Speziellen zugleich, zum Bestimmen mindestens eines Materialparameters des Mediums (11), insbesondere der relativen Permittivität, mittels elektromagnetischer Radar-Signalimpulse (SI) im Bereich zwischen 0,5 und 10 GHz,
mit den Schritten
• Aussenden der Radar-Signalimpulse (SI) und Empfangen von reflektierten Anteilen der Radar-Signalimpulse (rSI) mit mindestens zwei - insbesondere mindestens drei - Sende-Empfangs-Kombinationen mit sich unterscheidenden Aussende- und/oder Empfangspositionen, wobei die Aussende- und Empfangspositionen relativ zueinander jeweils bekannt sind,
• Bestimmen der jeweiligen Laufzeiten der empfangenen Radar-Signalimpulse und Erstellen von Bewertungsprofilen - als Bewertung der zeitabhängig empfangenen Signalimpulsstärke - aus den empfangenen Radar-Signalimpulsen für die jeweiligen Sende-Empfangs-Kombinationen,
• Abgleichen der erstellten Bewertungsprofile unter Verwendung der Kenntnis der jeweiligen Aussende- und Empfangspositionen, und
• Bestimmen einer Lage des eingebetteten Objekts (12) sowie des mindestens einen Materialparameters aus den abgeglichenen Bewertungsprofilen.

2. Radar-Messverfahren nach Anspruch 1,
**dadurch gekennzeichnet, dass**
• das Abgleichen der erstellten Bewertungsprofile unter Variation angenommener Werte des Materialparameters erfolgt und
• der Materialparameter zu jenem Wert bestimmt wird, für welchen die abgeglichenen Bewertungsprofile derart aufeinanderpassen, dass sich ein übereinstimmender Ort für das eingebettete Objekt (12) aus den jeweiligen Bewertungsprofilen ergibt.

3. Radar-Messverfahren nach Anspruch 1 oder 2,
**dadurch gekennzeichnet, dass**
• das Abgleichen der erstellten Bewertungsprofile derart erfolgt, dass sich ein übereinstimmender Ort für das eingebettete Objekt (12) ergibt und
• der Materialparameter bestimmt wird aus der Kenntnis der jeweiligen Laufzeiten und der - durch den ermittelten Ort des eingebetteten Objekts (12) sowie durch die bekannten Aussende- und Empfangspositionen festgelegten - jeweiligen Laufstrecken der Radar-Signalimpulse (SI).

4. Radar-Messverfahren nach einem der vorangehenden Ansprüche,
**dadurch gekennzeichnet, dass**
• das Aussenden der Radar-Signalimpulse (SI) und das Empfangen der reflektierten Teile (rSI) mit mindestens drei unterschiedlichen Sende-Empfangs-Kombinationen erfolgt,
• der Ort des eingebetteten Objekts (12) aus den abgeglichenen Bewertungsprofilen mit einer Überbestimmtheit ermittelt wird, und
• der Materialparameter anhand der Überbestimmtheit abgeleitet wird.

5. Radar-Messverfahren nach einem der vorangehenden Ansprüche,
**dadurch gekennzeichnet, dass**
als Bewertungsprofile jeweils in einer Bildebene für eine Sende-Empfangs-Kombination alle Punkte mit der entsprechenden momentanen Empfangssignalstärke bewertet werden, in denen das eingebettete Objekt positioniert sein könnte.

6. Radar-Messverfahren nach einem der vorangehenden Ansprüche,
**dadurch gekennzeichnet, dass**
das Aussenden und Empfangen der Radar-Signalimpulse (SI) mit mindestens fünf unterschiedlichen Sende-Empfangs-Kombinationen erfolgt.

7. Radar-Messverfahren nach einem der vorangehenden Ansprüche,
**dadurch gekennzeichnet, dass**
als die Lage des eingebetteten Objekts (12) eine Einbettungstiefe im Medium (11) bestimmt wird.

8. Radar-Messverfahren nach einem der vorangehenden Ansprüche,
**dadurch gekennzeichnet, dass**
als die Lage des eingebetteten Objekts (12) die dreidimensionale Position relativ zu den bekannten Aussende- und Empfangspositionen bestimmt wird.

9. Radar-Messverfahren nach einem der vorangehenden Ansprüche,
**dadurch gekennzeichnet, dass**
der Materialparameter für jenen Frequenzbereich bestimmt wird, in dem die Radar-Signalimpulse (SI) zur Bestimmung der Lage des eingebetteten Objekts (12) ausgesendet werden.

10. Radar-Messvorrichtung (1) zur Ortung eines in einem zu untersuchenden Medium (11) eingeschlossenen Objekts (12) und, im Speziellen zugleich, zur Bestimmung mindestens eines Materialparameters des Mediums (11), insbesondere der relativen Permittivität, mittels elektromagnetischer Signalimpulse (SI) im Bereich zwischen 0,5 und 10 GHz, mit
• einer Auswerteeinheit (24),
• einer Antennenanordnung (2) aus mehreren Antennen (4), die zum Empfang und/oder zur Aussendung der Signalimpulse (SI) ausgebildet und relativ zueinander bekannt positioniert sind, und
• Sendeschaltungen (14) zur Erzeugung der auszusendenden Signalimpulse und Empfangsschaltungen (15) zur Detektion von am Objekt (12) reflektierten Teilen (rSI) der Signalimpulse,
• Steuermittel zur Steuerung der Sende- und Empfangsschaltungen (14,15) derart, dass die Signalimpulse (SI) mit mindestens zwei - insbesondere mindestens drei - unterschiedlichen Sende-Empfangs-Antennenkombinationen aussend- bzw. empfangbar sind,
**dadurch gekennzeichnet, dass**
die Auswerteeinheit (24) zur Durchführung folgender Schritte des Radar-Messverfahrens nach einem der Ansprüche 1 bis 9 ausgebildet ist:
• Bestimmen der jeweiligen Laufzeiten der empfangenen Signalimpulse und Erstellen von Bewertungsprofilen - als Bewertung der zeitabhängig empfangenen Signalimpulsstärke - aus den empfangenen Radar-Signalimpulsen für die jeweiligen Sende-Empfangs-Antennenkombinationen,
• Abgleichen der erstellten Bewertungsprofile unter Verwendung der Kenntnis der bekannten Positionierung der Antennen zueinander, und
• Bestimmen einer Lage des eingebetteten Objekts sowie des mindestens einen Materialparameters aus den abgeglichenen Bewertungsprofilen.
